# EUROPÄISCHE PATENTSCHRIFT

(11) **EP 3 827 182 B1**
(45) Veröffentlichungstag und Bekanntmachung des Hinweises auf die Patenterteilung: **06.09.2023**
(21) Anmeldenummer: 19742679.4
(22) Anmeldetag: 10.07.2019
(51) Int. Cl.: F16H 7/08

(54) **HYDRAULISCHE SPANNVORRICHTUNG FÜR EINEN KETTENTRIEB**
HYDRAULIC TENSIONING DEVICE FOR A CHAIN DRIVE
DISPOSITIF DE SERRAGE HYDRAULIQUE POUR COMMANDE PAR CHAÎNE

(30) Priorität: 25.07.2018 DE 102018117977
(43) Veröffentlichungstag der Anmeldung: 02.06.2021
(73) Patentinhaber: CATENSYS Germany GmbH, 91052 Erlangen (DE)
(72) Erfinder: WEDEL, Andreas, 91448 Emskirchen (DE); FUHRMANN, Rainer, 91344 Waischenfeld (DE); KANG, Yong-Hee, 91085 Weisendorf (DE)
(74) Vertreter: FDST Patentanwälte
(86) Internationale Anmeldenummer: PCT/DE2019/100645
(87) Internationale Veröffentlichungsnummer: WO 2020/020411

(56) Entgegenhaltungen:
- DE-A1-102016 207 782
- DE-A1-102016 207 784
- DE-A1-102016 207 793

## Beschreibung

Die Erfindung betrifft eine hydraulische Spannvorrichtung für einen Kettentrieb mit einem Spannkolben, der in einer Aufnahme geführt ist und der an seiner Außenumfangsfläche Rastnuten aufweist, und mit einem Rastelement, das zwei ringförmige Abschnitte und das eine offene und eine geschlossene radiale Erweiterung aufweist, wobei das Rastelement mithilfe der zwei ringförmigen Abschnitte mit einer der Rastnuten in Eingriff gebracht werden kann, sowie mit einem Klemmanschlag und einem Gleitanschlag, die axial voneinander beabstandet sind, wobei die Aufnahme zwei axiale Verlängerungen aufweist, die sich in axialer Richtung zwischen der Klemmanschlagebene und der Gleitanschlagebene erstrecken und wobei die zwei axialen Verlängerungen der Aufnahme und der Spannkolben die zwei radialen Erweiterungen des Rastelements nicht einschließen.

Hydraulische Spannvorrichtungen mit Rasteinrichtung sind beispielsweise aus der US 2003/ 0 139 235 A1 bekannt. Eine derartige Rasteinrichtung umfasst einen Anschlagring, der in einer Umfangsnut zwischen dem Innenumfang des Gehäuses und dem Außenumfang des Kolbens installiert ist. Zu diesem Zweck muss der Innenumfang des Kolbens bearbeitet werden.

Eine weitere derartige Spannvorrichtung offenbart die DE 10 2016 207 784 A1. In einigen Anwendungen kann es als wünschenswert angesehen werden, das Zusammenwirken des Rastelements mit dem Gleitanschlag beeinflussen zu können.

Derartige Spannvorrichtungen sind weiterhin zu entnehmen aus DE 10 2016 207 793 A1 sowie aus DE 10 2016 207 782 A1.

Es ist daher Aufgabe der Erfindung, eine hydraulische Spannvorrichtung mit einem hinsichtlich der Haltbarkeit verbesserten Rastelement bereitzustellen.

Die Aufgabe wird gelöst durch eine hydraulische Spannvorrichtung mit den Merkmalen des Anspruchs 1.

Der Gleitanschlag umfasst demnach ein Gleitanschlagelement, wobei das Gleitanschlagelement einen Übergangsabschnitt und einen sich in radialer Richtung erstreckenden Funktionsabschnitt aufweist und wobei sich das Gleitanschlagelement an den axialen Verlängerungen abstützt. Auf vorteilhafte Weise kann die Aufnahme im Kontaktbereich mit dem Rastelement verstärkt werden, ohne dass aufwendige Änderungen an der Aufnahme oder dass eine Ausrichtung des für die Aufnahme verwendeten Werkstoffs an der Belastung des Kontaktbereichs ausgerichtet werden muss.

Die geschlossene radiale Erweiterung bezieht sich auf einen Bereich des Rastelements ohne Unterbrechung, die offene radiale Erweiterung bezieht sich auf einen Bereich des Rastelements, in dem sich die Enden befinden. Die offene radiale Erweiterung enthält also eine Unterbrechung des Rastelements, z.B. die Enden eines zu einem Rastelement geformten Drahtes. Die Drahtenden können sich überlappen, wodurch eine geschlossene Kontur entsteht. An der offenen radialen Erweiterung kann das Rastelement also auseinander gedrückt werden, im Bereich der geschlossenen radialen Erweiterung befindet sich der Drehpunkt. Das Rastelement kann mithilfe der zwei ringförmigen Abschnitte mit einer der Rastnuten in Eingriff gebracht werden.

Die zwei axialen Verlängerungen der Aufnahme und der Spannkolben schließen die zwei radialen Erweiterungen des Rastelements nicht ein. Jedenfalls zwei der zwei axialen Verlängerungen der Aufnahme und der Spannkolben schließen demnach zwei der zwei radialen Erweiterungen des Rastelements in radialer Richtung nicht ein, da die radialen Erweiterungen des Rastelements im Bereich der axialen Verlängerungen der Aufnahme angeordnet sind. Auf vorteilhafte Weise kann auf eine aufwendige Bearbeitung des Innenumfangs der Aufnahme verzichtet werden. Im Unterschied zur konventionellen Anordnung des Rastelements zwischen Spannkolben und Gehäuse muss keine umlaufende, am Innenumfang angeordnete Nut vorgesehen sein. Beispielsweise kann somit ermöglicht werden, auf eine spangebende Nachbearbeitung in dieser Hinsicht zu verzichten. Stattdessen können beispielsweise die Aufnahme und die zwei axialen Verlängerungen gießtechnisch gemeinsam gefertigt werden.

Besondere Vorteile mit Blick auf die gießtechnische Fertigung der Aufnahme und der axialen Verlängerungen der Aufnahme können erreicht werden, wenn die Unterseite einer axialen Verlängerung (also die Seite, die dem Spannkolben zugewandt ist) mit einem bestimmten radialen Abstand von dem zylindrischen Hohlraum der Aufnahme entfernt angeordnet ist (bzw. einer gedachten Verlängerung der Innenmantelfläche des zylindrischen Hohlraums). Der Abstand soll größer als 0,5 mm sein und bevorzugt zwischen 2 mm bis 3 mm betragen. Auf diese Weise lässt sich die Aufnahme kostengünstig beispielsweise mithilfe eines Auf-Zu-Werkzeugs und eines Schieber herstellen.

Ein erstes Ende und ein zweites Ende des Rastelements schließen die Unterbrechung ein, wobei - zumindest in einem nicht vorgespannten Zustand des Rastelements - in Umfangsrichtung der Abstand zwischen dem ersten Ende und dem zweiten Ende größer ist als zwischen Teilbereichen des Rastelements, die die Einschnürung bilden. Die Montage der Spannvorrichtung kann demnach derart erfolgen, dass das Rastelement in einem axialen Bereich zwischen der Klemmanschlagebene und der Gleitanschlagebene in radiale Richtung über die erste der zwei axialen Verlängerungen geschoben wird und anschließend über den Spannkolben sowie die zweite der zwei axialen Verlängerungen.

In weiterer Ausgestaltung ist der Spannkolben in einer Aufnahme geführt und schließt gemeinsam mit der Aufnahme einen Hochdruckraum ein. Über ein als Nachfüllventil gestaltetes Rückschlagventil mit einem beispielsweise kugelförmigen oder plattenförmigen Rückschlagventilkörper gelangt unter Druck stehendendes Hydraulikmittel in den Hochdruckraum. Wird über den Steuertrieb, insbesondere Kettentrieb, eine Kraft auf den mittels einer Feder gegen die Aufnahme vorgespannten Spannkolben ausgeübt, wird der Spannkolben in die Aufnahme gedrängt; Schwingungen des Steuertriebs werden gedämpft, indem Hydraulikmittel über einen Leckagespalt abgeführt wird. Zum Abbau von Druckspitzen kann ein Überdruckventil im Hochdruckraum angeordnet sein.

Um eine ausreichende Spannung der Kette gewährleisten zu können, ist der Spannkolben in weiterer Ausgestaltung zum einen mittels einer Feder gegen die Aufnahme verspannt. Beispielsweise bei Motorstart können jedoch große Kräfte auf den Spannkolben wirken, so dass ein übermäßiges Einfahren des Spannkolbens nicht wirksam verhindert werden kann. Um ein übermäßiges Einfahren des Spannkolbens zu vermeiden, weist der Spannkolben an seiner Außenumfangsfläche zumindest entlang eines axialen Abschnitts Rastnuten auf. Die Rastnuten sind umlaufend entlang des Außenumfangs angeordnet und derart gestaltet, dass ein Ausfahren des Spannkolbens ermöglicht, ein Einfahren des Spannkolbens jedoch verhindert wird: Die Rastnuten weisen jeweils zwei Nutwände auf, die mithilfe des Rastelements einerseits mit dem Klemmanschlag und andererseits mit dem Gleitanschlag in Kontakt gebracht werden können. Die Nutwand, die bei einem Einfahren mit dem Klemmanschlag in Kontakt gebracht werden kann, verläuft steiler als die gegenüberliegende Nutwand, die mit dem Gleitanschlag in Kontakt gebracht werden kann. Ein übermäßiges Einfahren wird auf diese Weise wirksam unterbunden, weil das Rastelement formschlüssig zwischen Rastnut und Klemmanschlag anliegt. Bei einem Ausfahren des Spannkolbens kann das Rastelement mit dem Gleitanschlag in Kontakt gebracht werden, wodurch das Rastelement über die Nutwand in die nächste Rastnut gleitet bzw. zwangsweise geschoben werden kann. Der axiale Abstand zwischen dem Klemm- und dem Gleitanschlag bestimmt gemeinsam mit der Nutbreite den Rückhub des Spannkolbens.

Die zwei axialen Verlängerungen können in weiterer Ausgestaltung als sich in axialer Richtung erstreckende Stege gebildet sein und können endseitig, der Aufnahme zugewandt, den Gleitanschlag formen. Der Gleitanschlag kann beispielsweise derart gebildet sein, dass die zwei axialen Verlängerungen jeweils in Form eines T-Stücks geformt sind. Die zwei radialen Erweiterungen des Rastelements können somit beim Ausfahren des Spannkolbens mit dem Gleitanschlag in Kontakt gebracht werden, wobei der Gleitanschlag durch die hakenförmigen Erweiterungen des T-Stücks gebildet wird.

Der Klemmanschlag kann in weiterer Ausgestaltung durch Anformungen an einer Stirnseite der Aufnahme gebildet werden. Der Klemmanschlag kann im Verhältnis zur Ebene, die orthogonal zu einer die Längsachse der Aufnahme enthaltenden Ebene verläuft, geneigt angeordnet sein. Die Klemmanschlagebene ist somit die Ebene, die im Wesentlichen den Linienkontaktbereich zwischen Klemmanschlag und Rastelement enthält. Die Klemmanschlagebene kann somit ebenfalls orthogonal zur Ebene verlaufen, die die Längsachse der Aufnahme enthält. Der Klemmanschlag kann eine Fase sein, die entlang eines Teils des Umfangs der Öffnung der Aufnahme verläuft.

In weiterer Ausgestaltung können die zwei axialen Verlängerung und der Rastring in beliebiger Relation zur Aufnahme angeordnet sein. Beispielsweise kann bei Vorhandensein von genau zwei axialen Verlängerungen eine gedachte Verbindungslinie zwischen den genau zwei axialen Verlängerungen parallel oder senkrecht zu einer Ebene verlaufen, die der Ebene der Anlagefläche zwischen Aufnahme und Montageumgebung entspricht.

In weiterer Ausgestaltung umfasst die Aufnahme einen zylindrischen Hohlraum, wobei der Spannkolben mithilfe des zylindrischen Hohlraums geführt ist. Alternativ umfasst die Aufnahme einen zylindrischen Hohlraum und eine in den zylindrischen Hohlraum eingesetzte Hülse, wobei der Spannkolben mithilfe der Hülse geführt ist. Besondere Kostenvorteile ergeben sich, wenn der Spannkolben direkt in einem zylindrischen Hohlraum der Aufnahme geführt ist. Die Aufnahme kann beispielsweise als Gehäuse aus Aluminium gestaltet sein und den zylindrischen Hohlraum zum Führen des Spannkolbens aufweisen. Alternativ kann der zylindrische Hohlraum eine Hülse, beispielsweise aus Stahl hergestellt, aufnehmen; in diesem Fall können die Hülse, das Rückschlagventil und weitere Komponenten vormontiert eingesetzt werden.

Das Rastelement kann beispielsweise elastisch dehnbar als Draht gestaltet sein; der Radius der ringförmigen Abschnitte kann somit vergrößert werden, wenn das Rastelement über eine der Nutwände geschoben wird. Das Rastelement kann jedoch auch im Bereich einer der zwei radialen Erweiterungen einen Biegebereich haben, wodurch sich das Rastelement nach der Art einer Klammer weitet.

Eine der zwei axialen Verlängerungen ist in radialer Richtung zwischen dem Spannkolben und einer der zwei radialen Erweiterungen des Rastelements angeordnet. Eine der zwei radialen Erweiterungen ist offen gestaltet, sodass die axiale Verlängerung nicht zwingend umschlossen wird. Bei insgesamt zwei radialen Erweiterungen und zwei axialen Verlängerungen ist somit genau eine der zwei axialen Verlängerungen in radialer Richtung zwischen dem Spannkolben und einer der zwei radialen Erweiterungen angeordnet. Die Gestaltung erleichtert auf vorteilhafte Weise die Montage des Rastelements.

Der Funktionsabschnitt erfüllt weiterhin eine Kontaktierfunktion derart, dass das Gleitanschlagelement mit dem Rastelement in Kontakt gebracht werden kann. Der Funktionsabschnitt des Gleitanschlagelements ist demnach dazu bestimmt, mit dem Rastelement in Kontakt gebracht zu werden. Wenn der Spannkolben aus der Aufnahme ausfährt, wird das Rastelement durch das Gleitanschlagelement gefangen und in die nächste Rastnut des Spannkolbens geschoben. Die durch den Kontakt zum Gleitanschlagelement abgebaute Bewegungsenergie des Rastelements wird durch das Gleitanschlagelement aufgenommen, wobei der Funktionsabschnitt des Gleitanschlagelements derart gestaltet ist, dass die Funktionsfähigkeit nicht durch Verschleiß beeinträchtigt wird.

In einer weiteren vorteilhaften Ausführungsform wird das Gleitanschlagelement in seiner axialen Beweglichkeit in Kolbeneinfahrrichtung und Kolbenausfahrrichtung begrenzt, indem eine Gegenkontur an der axialen Verlängerung der Aufnahme mit dem Funktionsabschnitt zusammenwirkt. Das Gleitanschlagelement wird an der Aufnahme gehalten, indem es an einer Gegenkontur der axialen Verlängerungen der Aufnahme anliegt. Die Gegenkontur kann somit z.B. im Zuge der gießtechnischen Herstellung der Aufnahme kostenneutral gefertigt werden. Die Gegenkontur ist vorteilhafterwiese derart gestaltet, dass das Gleitanschlagelement im Bereich der einen und der anderen der zwei axialen Verlängerungen an jeweils drei voneinander getrennt angeordneten Punkten an der Gegenkontur anliegt.

In einer Weiterentwicklung ist die Gegenkontur durch eine als T-Stück geformte axiale Verlängerung gestaltet und durch eine auf der axialen Verlängerung angeformte Nase. Auf diese Weise kann beispielsweise an jeder der zwei axialen Verlängerungen jeweils drei Punkte gebildet werden, an denen das Gleitanschlagelement anliegt. Die Nase kann am Steg des T-Stücks vorgesehen sein, an der dem Spannkolben abgewandten Seite. Die Gegenkontur kann eine Art Schlitz bilden, der das Gleitanschlagelement aufnimmt.

In einer vorteilhaften Ausführungsform ist das Gleitanschlagelement durch einen am Funktionsabschnitt angeordneten Hinterschnitt in radialer Richtung festgelegt. Auf diese Weise kann das Gleitanschlagelement an der Aufnahme sicher befestigt werden.

In einer vorteilhaften Ausführungsform kann das Gleitanschlagelement in radialer Richtung über die axiale Verlängerung geschoben werden, wobei das Gleitanschlagelement radial nach innen vorgespannt an der axialen Verlängerung anliegt. Auf diese Weise kann die Montierbarkeit vereinfacht werden, indem z.B. auf ein Werkzeug verzichtet werden kann.

In einer vorteilhaften Ausführung weist die offene radiale Erweiterung eine Einschnürung und eine Unterbrechung des Rastelements auf, wobei ein erstes Ende und ein zweites Ende des Rastelements die Unterbrechung einschließen und wobei in Umfangsrichtung der Abstand zwischen dem ersten Ende und dem zweiten Ende größer ist als zwischen Teilbereichen des Rastelements, die die Einschnürung bilden. Auf vorteilhafte Weise kann somit die Montage des Rastelements erleichtert werden, weil das Rastelement an entsprechender Position auf den Kolben gesteckt werden kann.

In einer vorteilhaften Ausführung kann das Rastelement im Bereich der Einschnürung mit dem Gleitanschlag in Kontakt gebracht werden. Im Bereich der Unterbrechung des Rastelements stehen sich zwei Endabschnitte des Rastelements gegenüber, wobei Teilabschnitte der zwei Endabschnitte in Umfangsrichtung voneinander beabstandet sind, sich nach radial außen erstrecken und mit dem Gleitanschlag in Kontakt gebracht werden können. Trotz Unterbrechung des Rastelements kann somit eine Anlage am Gleitanschlag sichergestellt werden. Weitere radiale Erweiterungen des Rastelements, die keine Unterbrechung aufweisen, können entsprechend gestaltet sein.

In einer vorteilhaften Weiterentwicklung kann sich an den Bereich der Einschnürung ein Bereich der Aufweitung anschließen. Die Aufweitung kann V-förmig gestaltet sein. Die Gestaltung mit einer Aufweitung erleichtert auf vorteilhafte Weise die Montage des Rastelements.

In einer vorteilhaften Ausführung sind die zwei axialen Verlängerungen im Bereich der Gleitanschlagebene voneinander getrennt angeordnet. Eine Verbindung besteht also nur über das Gehäuse im Bereich der Klemmanschlagebene. Auf vorteilhafte Weise kann somit das Gewicht der Vorrichtung optimiert und die gießtechnische Herstellbarkeit verbessert werden.

In einer vorteilhaften Ausführungsform schließen zwei der zwei axialen Verlängerungen in Umfangsrichtung einen Rastabschnitt ein, wobei eine der zwei ringförmigen Abschnitte im Bereich dieses Rastabschnitts mit einer der Rastnuten in Eingriff gebracht werden kann; im Bereich der Rastabschnitte ist der Spannkolben nicht von der Aufnahme umgeben, sodass die Rastnuten von außen zugänglich sind. Das Rastelement kann somit in Umfangsrichtung zwischen den axialen Verlängerungen in die Rastnuten eingreifen. Die Funktionsweise der Rastierung kann somit in montiertem Zustand beobachtet werden, wodurch die Wartung des Verbrennungsmotors erleichtert wird. Darüber hinaus ist das Rastelement ein außenliegendes Bauteil der Spannvorrichtung; es ist also von außen zugänglich, wodurch eine Montage und Demontage des Rastelements vereinfacht wird. Darüber hinaus kann ein Sicherungselement einen der zwei ringförmigen Abschnitte im Bereich des Rastabschnitts mit einer der Rastnuten zwangsweise in Eingriff halten. Auf diese Weise kann eine Transportsicherung verwirklicht werden, weil eine Verlagerung des Rastelements in eine benachbarte Rastnut unterbunden wird.

In einer Weiterentwicklung weist das Rastelement zwei ringförmige Abschnitte und zwei radiale Erweiterungen auf, wobei die Aufnahme genau zwei axiale Verlängerungen aufweist, die genau zwei Rastabschnitte einschließen. Das Rastelement kann demnach mit zwei ringförmigen Abschnitten in eine der Rastnuten eingreifen, wodurch ein sicheres Klemmen ermöglicht wird. Darüber hinaus kann die geometrische Komplexität des Rastelements vermindert werden, da lediglich zwei axiale Verlängerungen vorgesehen sind; das Rastelement weist demnach zwei radiale Erweiterungen auf.

In einer weiteren vorteilhaften Ausführungsform weisen die zwei axialen Verlängerungen in einem axialen Abschnitt zwischen der Klemmanschlagebene und der Gleitanschlagebene in Umfangsrichtung beidseitig eine Verjüngung auf, wodurch in der Gleitanschlagebene der Gleitanschlag gebildet wird. Der Gleitanschlag befindet sich somit dort, wo die Verjüngung endet. Die zwei axialen Verlängerungen können demnach T-förmig gestaltet sein, wobei der Steg des T sich zwischen der Gleitanschlagebene und der Klemmanschlagebene erstreckt und das Dach des T die Gleitanschlagebene bildet, woraus, dem Steg zugewandt, der Gleitanschlag hervorgeht. Das Dach des T kann im Wesentlichen tangential zur Umfangsrichtung verlaufen. Alternative kann das Dach des T, einen Kreisabschnitt bildend, in Umfangsrichtung verlaufen, wobei die erste Alternative vorteilhaft hinsichtlich der gießtechnischen Herstellbarkeit ist.

Eine mit Blick auf das Zurücksetzen vorteilhafte Ausführungsform betrifft eine Spannvorrichtung, die im Bereich des Rückhubs, also zwischen Gleitanschlagebene und Klemmanschlagebene, eine Rücksetzrampe aufweist, wobei die Rücksetzrampe eine sich nach radial innen erstreckende Erhebung der axialen Verlängerung der Aufnahme ist. Die Rücksetzrampe stellt sicher, dass ein Blockadeelement, wie beispielsweise ein Schraubendreher, parallel zur Gleitanschlagebene positioniert werden kann. Die Rücksetzrampe ist bevorzugt im Bereich des Klemmanschlags angeordnet und kann - eine Einführschräge bildend - in Richtung Gleitanschlag verlaufen. Die Rücksetzrampe ist bevorzugt an einer der zumindest zwei axialen Verlängerungen vorgesehen, die von einer radialen Erweiterung ohne Unterbrechung des Rastelements umgeben ist.

Alternativ zu einer Gestaltung mit Rücksetzrampe kann auch ein keilförmiges Spezialwerkzeug Einsatz finden, dass - nach Positionierung - mit einer seiner Kanten gegen die Aufnahme gedrückt wird; auf diese Weise kann das Rastelement in vergleichbarer Weise parallel zur Gleitanschlagebene positioniert und im Bereich des Gleitanschlags festgelegt werden.

Eine Gestaltung des Rastelements entsprechend einer der vorangehend beschriebenen Ausführungsformen erleichtert auf vorteilhafte Weise die Montage des Rastelements. Das Rastelement kann in einem ersten Schritt in einem axialen Bereich zwischen der Klemmanschlagebene und der Gleitanschlagebene in radiale Richtung über die erste der zwei axialen Verlängerungen geschoben werden. Anschließend wird das Rastelement über den Spannkolben sowie die zweite der zwei axialen Verlängerungen geschoben. Die Montage kann somit bei vormontiertem Spannkolben erfolgen bei zugleich geringer Komplexität.

Das Zurücksetzen des Spannkolbens erleichtert eine Demontage und eine anschließende Montage beispielsweise einer Komponente eines Verbrennungsmotors. Als alternatives Verfahren kommt eine Ausführung mit einem Rastelement in Betracht, das im Bereich der Unterbrechung Betätigungsabschnitte aufweist. Ein Zusammendrücken der Betätigungsabschnitte ermöglicht ein Aufweiten des Rastelements, wodurch ein Formschluss zwischen Rastnut, Rastelement und Klemmanschlag vermieden wird.

Die Erfindung wird im Folgenden anhand eines Ausführungsbeispiels erläutert:
- Fig. 1: zeigt einen Kettentrieb für einen Verbrennungsmotor mit seinen wesentlichen Komponenten;
- Fig. 2a: zeigt ein Ausführungsbeispiel einer hydraulischen Spannvorrichtung;
- Fig. 2b: zeigt die Aufnahme aus Fig. 2a;
- Fig. 3: zeigt einen Längsschnitt der hydraulischen Spannvorrichtung aus Fig. 2a;
- Fig. 4: zeigt einen zweiten Längsschnitt der hydraulischen Spannvorrichtung aus Fig. 2a;
- Fig. 5: zeigt eine Draufsicht der hydraulischen Spannvorrichtung aus Fig. 2a;
- Fig. 6: zeigt ein Gleitanschlagelement der hydraulischen Spannvorrichtung aus Fig. 2a;
- Fig. 7: zeigt eine perspektivische Ansicht des Gleitanschlagelements der hydraulischen Spannvorrichtung aus Fig. 2a;
- Fig. 8: zeigt ein Rastelement der hydraulischen Spannvorrichtung aus Fig. 2a;
- Fig. 9: zeigt die hydraulische Spannvorrichtung aus Fig. 2a mit einer alternativ vorgesehenen Rücksetzrampe;
- Fig. 10a: zeigt eine erste Ausführungsform des W-förmigen Gleitanschlagelements der hydraulischen Spannvorrichtung aus Fig. 2a;
- Fig. 10b: zeigt eine perspektivische Darstellung des Gleitanschlagelements aus Fig. 10a;
- Fig. 11a: zeigt eine zweite Ausführungsform des W-förmigen Gleitanschlagelements;
- Fig. 11b: zeigt eine perspektivische Darstellung des Gleitanschlagelements aus Fig. 11a;
- Fig. 12: zeigt eine für die erste und zweite Ausführungsform des Gleitanschlagelements aus Fig. 10a bis Fig. 11b geeignete Ausführungsform der Aufnahme;
- Fig. 13a: zeigt die Aufnahme aus Fig. 12 mit der ersten Ausführungsform des Gleitanschlagelements aus Fig. 10a und Fig. 10b und
- Fig. 13b: zeigt die Aufnahme aus Fig. 12 mit der zweiten Ausführungsform des Gleitanschlagelements aus Fig. 11a und Fig. 11b.

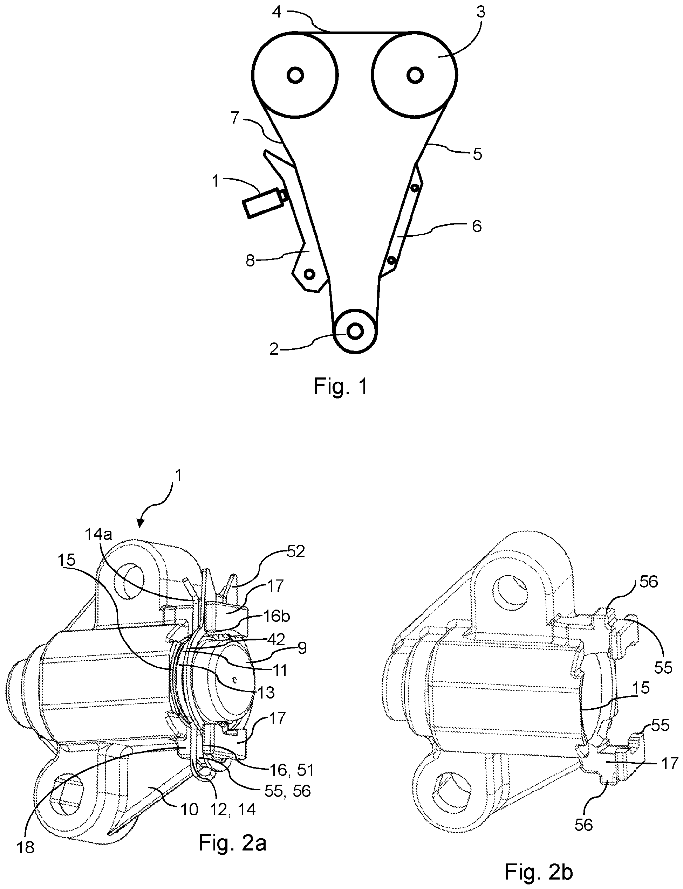

In Fig. 1 ist ein Kettentrieb mit einer hydraulischen Spannvorrichtung 1 für einen Verbrennungsmotor mit seinen wesentlichen Komponenten dargestellt. Ein Kettentrieb umfasst prinzipiell ein mit der Kurbelwelle verbundenes Antriebskettenrad 2, zwei mit jeweils einer Nockenwelle verbundene Abtriebskettenräder 3 sowie eine Steuerkette 4, die das Antriebskettenrad 2 mit den Abtriebskettenrädern 3 verbindet. Über das Zugtrum 5 der Steuerkette 4 wird ein Antriebsmoment der Kurbelwelle auf die Nockenwellen übertragen. Am Zugtrum 5 wird die Steuerkette 4 mittels einer Führungsschiene 6 geführt.

Die Steuerkette 4 wird an ihrem Leertrum 7 gespannt, um ihre Funktionalität über die Betriebsdauer gewährleisten zu können. Zu diesem Zweck wird die Steuerkette 4 mittels einer hydraulischen Spannvorrichtung 1 und eines Spannarms 8 mit einer Spannkraft beaufschlagt. Hydraulische Spannvorrichtungen 1 gemäß der beschriebenen Ausführungsform gewährleisten darüber hinaus eine Dämpfung des Kettentriebs.

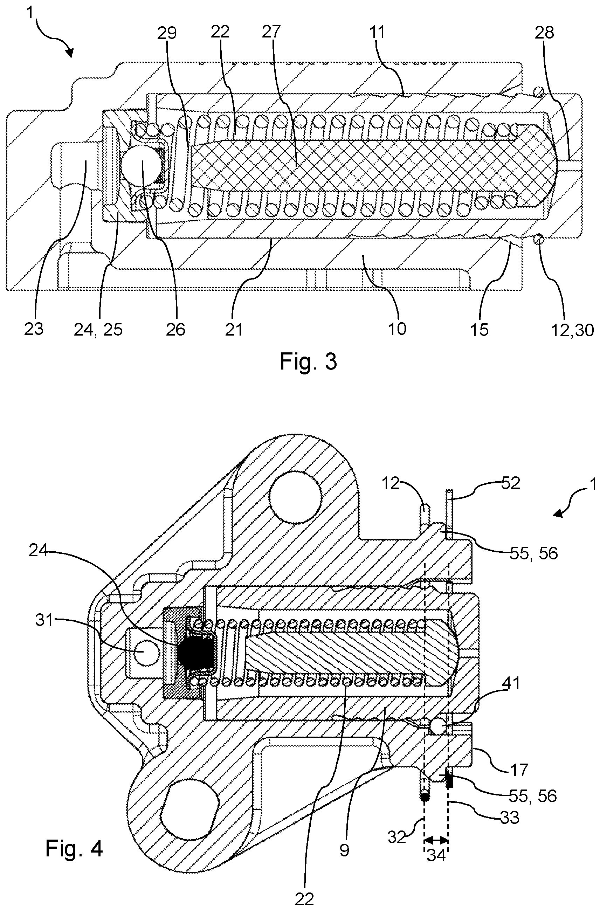

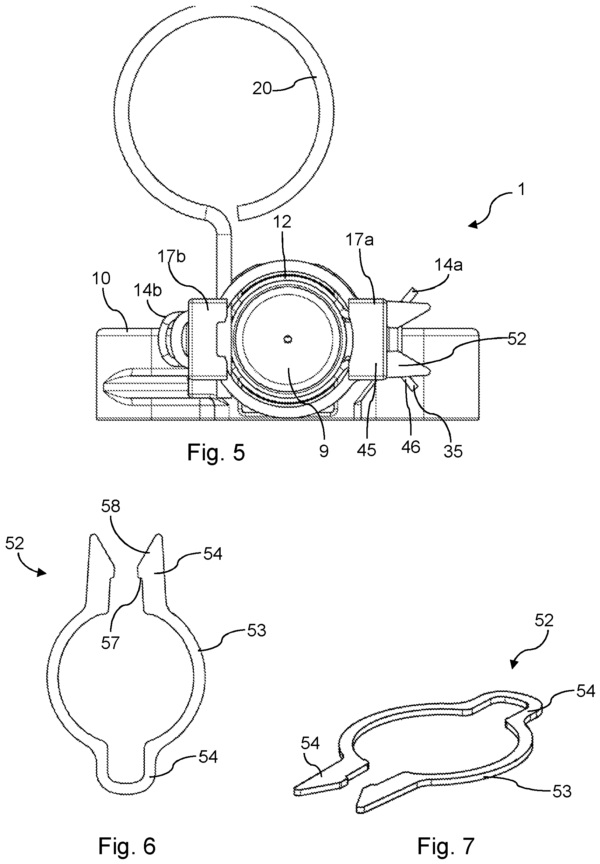

In Fig. 2a ist eine hydraulische Spannvorrichtung 1 eines Kettentriebs gezeigt mit einem mittels Transportsicherungsdraht 20 (siehe Fig. 5) sicherbaren Spannkolben 9, der in einem zylindrischen Hohlraum einer Aufnahme 10 geführt ist und an seiner Außenumfangsfläche Rastnuten 11 aufweist. Weiterhin gezeigt ist ein Rastelement 12, das zwei ringförmige Abschnitte 13 und zwei radiale Erweiterungen 14 aufweist, wobei das Rastelement 12 mithilfe der zwei ringförmigen Abschnitte 13 mit einer der Rastnuten 11 in Eingriff steht. Ein Klemmanschlag 15 und ein Gleitanschlag 16 sind axial voneinander beabstandet angeordnet, wobei sich in axialer Richtung zwischen einer Klemmanschlagebene 32 und einer Gleitanschlagebene 33 (siehe Fig. 3) zwei axiale Verlängerungen 17 erstrecken. Die zwei axialen Verlängerungen 17 weisen in einem axialen Abschnitt zwischen der Klemmanschlagebene 32 und der Gleitanschlagebene 33 in Umfangsrichtung beidseitig eine Verjüngung 18 auf, wodurch in der Gleitanschlagebene 33 im Bereich des Gleitanschlagelements 52 der Gleitanschlag 16 gebildet wird. Das Gleitanschlagelement 52 wird durch eine Gegenkontur 55 an den axialen Verlängerungen 17 gehalten. Die zwei axialen Verlängerungen 17 schließen in Umfangsrichtung einen Rastabschnitt 42 ein, wobei die zwei ringförmigen Abschnitte 13 im Bereich des Rastabschnitts 42 mit einer der Rastnuten 11 in Eingriff gebracht werden kann.

Die zwei axialen Verlängerungen 17 und der Spannkolben 9 schließen die zwei radialen Erweiterungen 14 des Rastelements 12 nicht ein. Das Rastelement ist somit - in radialer Richtung gesehen - nicht zwischen dem Spannkolben 9 und der axialen Verlängerung 17a angeordnet. Die geschlossene radiale Erweiterung 14b dagegen schließt - in radialer Richtung gesehen - gemeinsam mit dem Spannkolben 9 die axiale Verlängerung 17b ein.

In Fig. 2b ist die Aufnahme 10 der hydraulischen Spannvorrichtung 1 gezeigt. Dargestellt sind die zwei axialen Verlängerungen 17, die das Profil eines T-Stückes aufweisen. Das Dach des "T" sowie die nach radial außen gewandten Nasen 56 bilden eine Gegenkontur 55, die das Gleitanschlagelement 52 in Position hält. Das Rastelement 12 bewegt sich somit zwischen Gleitanschlagelement 52 und Klemmanschlag 15.

Fig. 3 zeigt einen Längsschnitt durch die hydraulische Spannvorrichtung 1. Dargestellt ist die Aufnahme 10 mit dem zylindrischen Hohlraum 21, in dem der Spannkolben 9 geführt ist. Spannkolben 9 und Innenmantelfläche des zylindrischen Hohlraums 21 schließen einen Hochdruckraum 22 ein, der über eine Zulaufleitung 23 und ein Rückschlagventil 24, das einen Ventilsitz 25 und einen kugelförmigen Schließkörper 26 aufweist, mit Hydraulikmittel versorgt wird. Im Hochdruckraum 22 ist ein Element zur Verminderung des Füllvolumens 27 angeordnet, das endseitig eine Entlüftungsöffnung 28 bedeckt. Alternativ kann jedoch auch ein - nicht gezeigtes - Überdruckventil in dem Spannkolben 9 eingesetzt sein. Der Spannkolben 9 ist mittels einer Feder 29 in Ausfahrrichtung und somit nach Montage gegen die Spannschiene 8 vorgespannt.

Der Spannkolben 9 weist am Außenumfang Rastnuten 11 auf, wobei das Rastelement 12 in die äußerste Rastnut 30 eingreift. Die Rastnuten 11 sind umlaufend entlang des Außenumfangs angeordnet und derart gestaltet, dass ein Ausfahren des Spannkolbens 9 ermöglicht, ein Einfahren des Spannkolbens 9 jedoch verhindert wird: Die Rastnuten 11 weisen jeweils zwei Nutwände auf, die mithilfe des Rastelements 12 einerseits mit dem Klemmanschlag 15 und andererseits mit dem Gleitanschlag 16 in Kontakt gebracht werden können. Die Nutwand, die bei einem Einfahren mit dem Klemmanschlag 15 in Kontakt gebracht werden kann, verläuft steiler als die gegenüberliegende Nutwand, die mit dem Gleitanschlag in Kontakt gebracht werden kann. Ein übermäßiges Einfahren wird auf diese Weise wirksam unterbunden, weil das Rastelement 12 formschlüssig zwischen Rastnut 30 und Klemmanschlag 15 anliegt. Bei einem Ausfahren des Spannkolbens 9 kann das Rastelement 12 mit dem Gleitanschlag 16 in Kontakt gebracht werden, wodurch das Rastelement 12 über die Nutwand in die nächste Rastnut 30 gleitet bzw. zwangsweise geschoben werden kann.

Die axialen Verlängerungen 17, aus denen der Gleitanschlag 16 hervorgeht, sind in Fig. 4 dargestellt. Das Rastelement 12 ist in Eingriff mit der äußersten Rastnut 30 und befindet sich in einem axialen Abschnitt zwischen der Klemmanschlagebene 32 und der Gleitanschlagebene 33, die durch das an den Nasen 56 der Gegenkontur 55 anliegende Gleitanschlagelement 52 gebildet wird. Der axiale Abstand zwischen der Klemmanschlagebene 32 und der Gleitanschlagebene 33 bestimmt den Rückhub 34 des Spannkolbens 9. Des Weiteren dargestellt ist eine Zulaufbohrung 31, die den Hochdruckraum 22 über das Rückschlagventil 24 mit Hydraulikmittel versorgt.

Eine Detailansicht der hydraulischen Spannvorrichtung 1 ist in Fig. 5 dargestellt. Der durch ein Transportsicherungsdraht 20 gesicherte Spannkolben 9 ist in dem zylindrischen Hohlraum der als Gehäuse gestalteten Aufnahme 10 eingesetzt, wobei das Rastelement 12 auf dem Spannkolben 9 sitzt. Das Rastelement 12 umfasst zwei ringförmige Abschnitte 13, die in eine Rastnut 11 des Spannkolbens 9 eingreifen. Eine erste radiale Erweiterung 14a des Rastelements 12 schließt mit dem Spannkolben 9 die erste axiale Verlängerung 17a ein. Eine zweite radiale Erweiterung 14b schließt mit dem Spannkolben 9 die zweite axiale Verlängerung 17b ein. Die zweite radiale Erweiterung 14b weist eine Einschnürung 45 und eine Unterbrechung 35 des Rastelements 12 auf. An den Bereich der Einschnürung 45 schließt sich ein Bereich der Aufweitung 46 an. Die Aufweitung 46 kann V-förmig gestaltet sein. Die Gestaltung mit einer Aufweitung 46 erleichtert auf vorteilhafte Weise die Montage des Rastelements 12. Das Rastelement kann mit dem Gleitanschlagelement 52 in Kontakt gebracht werden.

Die Fig. 6 zeigt das Gleitanschlagelement aus dem zuvor beschriebenen Ausführungsbeispiel. Das Gleitanschlagelement 52 weist einen Übergangsabschnitt 53 und einen sich in radialer Richtung erstreckenden Funktionsabschnitt 54 auf. Der Funktionsabschnitt 54 erfüllt eine Kontaktierfunktion derart, dass das Gleitanschlagelement 52 mit dem Rastelement 12 in Kontakt gebracht werden kann. Der Funktionsabschnitt 54 ist dazu bestimmt, mit der Gegenkontur 55 (siehe Fig. 2b) derart zusammenzuwirken, dass das Gleitanschlagelement 52 in seiner axialen Beweglichkeit in Kolbeneinfahrrichtung und Kolbenausfahrrichtung begrenzt wird.

Das Gleitanschlagelement 52 ist dazu geeignet, vor dem Einsetzen des Spannkolbens 9 in radialer Richtung über die axiale Verlängerung 17 (siehe Fig. 2b) der Aufnahme 10 geschoben werden zu können, wobei das Gleitanschlagelement 52 radial nach innen vorgespannt an der axialen Verlängerung 17 zur Anlage gebracht werden kann. Eine Einführöffnung 58 erleichtert das Aufschieben des Gleitanschlagelements 52 auf die axiale Verlängerung 17, wobei das Gleitanschlagelement nach dem Aufschieben durch einen am Funktionsabschnitt 54 angeordneten Hinterschnitt 57 in radialer Richtung festgelegt ist. Die Fig. 7 veranschaulicht die Eigenschaften des aus Blech gefertigten, beispielsweise gestanzten Gleitanschlagelements 52.

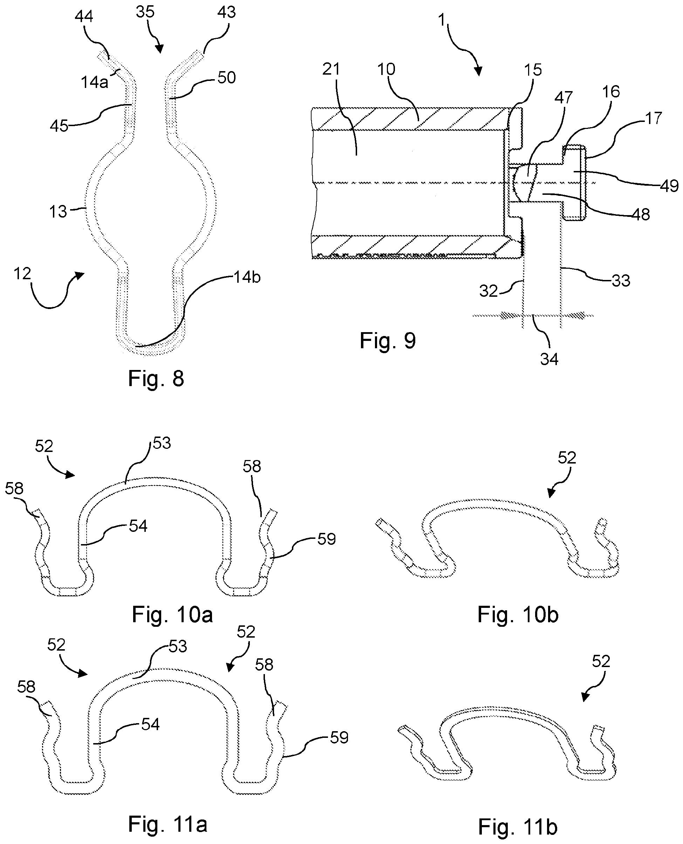

Die weitere Gestaltung des Rastrings 12 mit Einschnürung 45 und Aufweitung 46 veranschaulicht Fig. 8. Im Bereich der Unterbrechung 35 des Rastelements 12 stehen sich ein erstes Ende 43 und ein zweites Ende 44 des Rastelements 12 gegenüber, wobei das erste Ende 43 und das zweite Ende 44 des Rastelements 12 die Unterbrechung 35 einschließen. Zumindest in einem nicht vorgespannten Zustand des Rastelements 12 ist in Umfangsrichtung der Abstand zwischen dem ersten Ende 43 und dem zweiten Ende 44 größer als zwischen Teilbereichen des Rastelements, die die Einschnürung 45 bilden. Die geometrische Gestaltung erleichtert ein Aufschieben des Rastelements 12 in radialer Richtung.

Des Weiteren ist sowohl am offenen Ende 14a als auch am geschlossenen Ende 14b der radialen Erweiterung 14 ein abgeflachter Querschnitt 50 angeordnet. Im Bereich der Abflachung des abgeflachten Querschnitts 50 ist das Rastelement 12 mit dem Gleitanschlag kontaktierbar, wodurch die Anlagefläche - im Vergleich mit einem kreisrunden Querschnitt - vergrößert wird.

Fig. 9 zeigt die hydraulische Spannvorrichtung 1 aus Fig. 2a mit einer alternativ vorgesehenen Rücksetzrampe 47. Dargestellt ist die Aufnahme 10 mit dem zylindrischen Hohlraum 21, an deren Öffnung der Klemmanschlag 15 gebildet ist. Die axiale Verlängerung 17 erstreckt sich in axialer Richtung von der Aufnahme 10 weg und endet mit dem Gleitanschlag 16. Die axiale Lage der Klemmanschlagebene 32 und der Gleitanschlagebene 33 nehmen wesentlichen Einfluss auf den maximal möglichen Rückhub 34 eines (nicht dargestellten) Spannkolbens, bevor das Rastelement in eine benachbarte Rastnut 11 überführt wird. Im Bereich des Rückhubs 34 ist die Rücksetzrampe 47 angeordnet. Die Rücksetzrampe 47 ist eine sich nach radial innen erstreckende Erhebung des Stegs 48 der T-förmig gestalteten axialen Verlängerung 17. Die T-förmig gestaltete axiale Verlängerung 17 schließt mit einem Dach 49 ab.

In einem ersten Schritt kann somit ein nicht dargestelltes Blockadeelement, wie beispielswiese ein Schraubendreher, in einem axialen Bereich zwischen der Klemmanschlagebene 32 und der Gleitanschlagebene 33 in tangentialer Richtung zum zylindrischen Hohlraum 21 (bzw. in tangentialer Richtung zu dem nicht dargestellten Spannkolben 9) derart eingeführt werden, dass das Blockadeelement nach dem Einführen zwischen einem nicht dargestellten Rastelement 12 und dem Klemmanschlag 15 angeordnet ist. Die Rücksetzrampe ist daher an einer der zumindest zwei axialen Verlängerungen 17 vorgesehen, die von einer radialen Erweiterung 14 ohne Unterbrechung 35 des Rastelements 12 umgeben ist (siehe beispielsweise Fig. 5, axiale Verlängerung 17b). Die Rücksetzrampe 47 stellt sicher, dass das Blockadeelement parallel zur Gleitanschlagebene 33 positioniert wird. Darüber hinaus kann das Rastelement 12 zwischen Blockadeelement und Gleitanschlag 16 in axialer Richtung festgelegt werden. In einem zweiten Schritt kann der nicht dargestellte, ausgefahrene Spannkolben 9 in Richtung Aufnahme 10 verlagert und anschließend mit einem Transportsicherungsdraht festgelegt werden.

In Fig. 10a ist eine alternative Gestaltung des Gleitanschlagelements 52 gezeigt. Die erste Ausführungsform eines W-förmig gestalteten Gleitanschlagelements 52 ist aus einem Draht geformt und weist - ebenso wie die in Fig. 6 gezeigte Ausführungsform - einen ringförmigen Übergangsabschnitt 53 und zwei Funktionsabschnitte 54 auf. Die Funktionsabschnitte 54 liegen in einem Bereich, in dem das Gleitanschlagelement 54 in Kontakt mit der Gegenkontur 55 und mit dem Rastelement 12 gebracht werden kann.

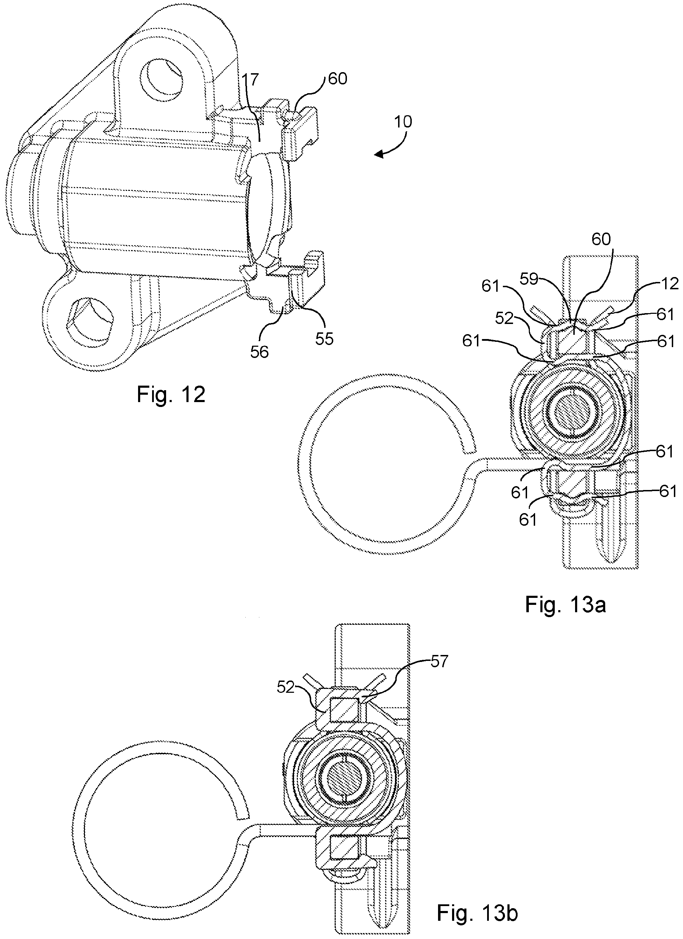

Das Gleitanschlagelement kann in radialer Richtung auf die axialen Verlängerungen 17 einer Aufnahme 10 (siehe Fig. 12) geschoben und an der Aufnahme durch Klemmen befestigt werden. Der Funktionsabschnitt umfasst zum Erfüllen seiner Haltefunktion eine Formschlusskontur 59. Die Fig. 10b zeigt eine perspektivische Ansicht des Gleitanschlagelements aus Fig. 10a. Die Fig. 11a und 11b zeigen eine funktional gleiche Gestaltung, wobei das Gleitanschlagelement 52 aus Blech gestanzt ist.

Die Fig. 12 zeigt eine Aufnahme 10 der hydraulischen Spannvorrichtung, die im Wesentlichen die gleichen Merkmale aufweist wie die in Fig. 2b gezeigte Aufnahme. Die Gegenkontur 55 weist zusätzlich zu den zuvor beschriebenen Merkmalen eine Formschlussgegenkontur 60 auf, die mit der in Fig. 10a bis Fig. 11b gezeigten Formschlusskontur 59 zusammenwirkt, um das Gleitanschlagelement 52 an der Aufnahme befestigen zu können.

Die Fig. 13a veranschaulicht eine hydraulische Spannvorrichtung 1 mit einem Gleitanschlagelement 52 gem. Fig. 10a bis Fig. 11b in montiertem Zustand. Gezeigt ist ein Gleitanschlagelement 52, dessen Formschlusskontur 59 an der Formschlussgegenkontur 60 anliegt. Ferner wird die Kontaktierfunktion des Funktionsabschnitts 54 veranschaulicht, die in den Bereichen 61 erfüllt wird, in denen das Rastelement 12 in Kontakt mit dem Gleitanschlagelement 52 gebracht werden kann.

Fig. 13b zeigt eine entsprechende Ausführung unter Verwendung einer dritten W-förmigen Ausführung des Gleitanschlagelements 52. Die Ausführung unterscheidet sich von den in Fig. 10a bis Fig. 11b gezeigten Gleitanschlagelementen insofern, als statt einer Formschlusskontur 59 ein Hinterschnitt 57 Anwendung findet. Die Aufnahme 10 entspricht der Ausführung, die in Fig. 2b dargestellt ist.

### Bezugszeichenliste

- 1: hydraulische Spannvorrichtung
- 2: Antriebskettenrad
- 3: Abtriebskettenrad
- 4: Steuerkette
- 5: Zugtrum
- 6: Führungsschiene
- 7: Leertrum
- 8: Spannarm
- 9: Spannkolben
- 10: Aufnahme
- 11: Rastnut
- 12: Rastelement
- 13: ringförmiger Abschnitt
- 14: radiale Erweiterung
- 14a: offene radiale Erweiterung
- 14b: geschlossene radiale Erweiterung
- 15: Klemmanschlag
- 16: Gleitanschlag
- 16a: erster Gleitanschlag
- 16b: zweiter Gleitanschlag
- 17: axiale Verlängerung
- 17a: erste axiale Verlängerung
- 17b: zweite axiale Verlängerung
- 18: Verjüngung
- 20: Transportsicherungsdraht
- 21: zylindrischer Hohlraum
- 22: Hochdruckraum
- 23: Zulaufleitung
- 24: Rückschlagventil
- 25: Ventilsitz
- 26: kugelförmiger Schließkörper
- 27: Element zur Verminderung des Füllvolumens
- 28: Entlüftungsöffnung
- 29: Feder
- 30: äußerste Rastnut
- 31: Zulaufbohrung
- 32: Klemmanschlagebene
- 33: Gleitanschlagebene
- 34: Rückhub
- 35: Unterbrechung
- 38: Nagel
- 42: Rastabschnitt
- 43: erstes Ende
- 44: zweites Ende
- 45: Einschnürung
- 46: Aufweitung
- 47: Rücksetzrampe
- 48: Steg
- 49: Dach
- 50: abgeflachter Querschnitt
- 52: Gleitanschlagelement
- 53: Übergangsabschnitt
- 54: Funktionsabschnitt
- 55: Gegenkontur
- 56: Nase
- 57: Hinterschnitt
- 58: Einführöffnung
- 59: Formschlusskontur
- 60: Formschlussgegenkontur
- 61: Bereich der Kontaktierfunktion

## Patentansprüche

1. Hydraulische Spannvorrichtung (1) für einen Kettentrieb mit
- einer Aufnahme (10), die sich entlang einer Längsachse in axialer Richtung erstreckt,
- einem Spannkolben (9), der in der Aufnahme (10) geführt ist und der an seiner Außenumfangsfläche Rastnuten (11) aufweist,
- einem Rastelement (12), das zwei ringförmige Abschnitte (13) sowie eine offene und eine geschlossene radiale Erweiterung (14a, 14b) aufweist, wobei die offene radiale Erweiterung (14a) eine Unterbrechung des Rastelements (12) enthält, so dass an der offenen radialen Erweiterung (14a) das Rastelement (12) auseinandergedrückt werden kann, und wobei die geschlossene radiale Erweiterung (14b) sich auf einen Bereich des Rastelements (12) ohne Unterbrechung bezieht,
- einem Klemmanschlag (15) und einem Gleitanschlag (16), die axial voneinander beabstandet sind, wobei der Klemmanschlag (15) eine Klemmanschlagebene (32) und der Gleitanschlag (16) eine Gleitanschlagebene (33) definieren und wobei die Aufnahme (10) zwei axiale Verlängerungen (17) aufweist, die sich in axialer Richtung zwischen der Klemmanschlagebene (32) und der Gleitanschlagebene (33) erstrecken, **dadurch gekennzeichnet, dass**
der Gleitanschlag (16) ein Gleitanschlagelement (52) umfasst, wobei das Gleitanschlagelement (52) einen Übergangsabschnitt (53) und einen sich in radialer Richtung erstreckenden Funktionsabschnitt (54) aufweist und wobei sich das Gleitanschlagelement (52) an den axialen Verlängerungen (17) abstützt, und dass der Funktionsabschnitt (54) eine Kontaktierfunktion erfüllt, derart dass das Gleitanschlagelement (52) mit dem Rastelement (12) in Kontakt gebracht wird, wenn der Spannkolben (9) aus der Aufnahme (10) ausfährt, so dass das Rastelement (12) durch das Gleitanschlagelement (52) gefangen und in eine nächste Rastnut (11) des Spannkolbens (9) geschoben wird.

2. Hydraulische Spannvorrichtung nach dem vorangehenden Anspruch, **dadurch gekennzeichnet, dass** das Gleitanschlagelement (52) in seiner axialen Beweglichkeit in Kolbeneinfahrrichtung und Kolbenausfahrrichtung begrenzt wird, indem eine Gegenkontur (55) an der axialen Verlängerung (17) der Aufnahme (10) mit dem Funktionsabschnitt (54) zusammenwirkt.

3. Hydraulische Spannvorrichtung nach Anspruch 2, **dadurch gekennzeichnet, dass** die Gegenkontur (55) durch eine als T-Stück geformte axiale Verlängerung (17) gestaltet ist und durch eine auf der axialen Verlängerung (17) angeformte Nase (56).

4. Hydraulische Spannvorrichtung nach einem der vorangehenden Ansprüche, **dadurch gekennzeichnet, dass** das Gleitanschlagelement (52) durch einen am Funktionsabschnitt (54) angeordneten Hinterschnitt (57) in radialer Richtung festgelegt ist.

5. Hydraulische Spannvorrichtung nach einem der vorangehenden Ansprüche, **dadurch gekennzeichnet, dass** das Gleitanschlagelement (52) in radialer Richtung über die axiale Verlängerung (17) geschoben werden kann, wobei das Gleitanschlagelement (52) radial nach innen vorgespannt an der axialen Verlängerung (17) anliegt.

6. Hydraulische Spannvorrichtung nach einem der vorangehenden Ansprüche, **dadurch gekennzeichnet, dass** die zwei axialen Verlängerungen (17) in Umfangsrichtung einen Rastabschnitt (42) einschließen, wobei ein der zwei ringförmigen Abschnitte (13) im Bereich des Rastabschnitts (42) mit einer der Rastnuten (11) in Eingriff gebracht werden kann.

7. Hydraulische Spannvorrichtung nach einem der vorangehenden Ansprüche, **dadurch gekennzeichnet, dass** das Rastelement (12) im Bereich der Einschnürung (45) mit dem Gleitanschlag (16) in Kontakt gebracht werden kann.

8. Hydraulische Spannvorrichtung nach einem der vorangehenden Ansprüche, **dadurch gekennzeichnet, dass** die zwei axialen Verlängerungen (17) im Bereich der Gleitanschlagebene (33) voneinander getrennt angeordnet sind.

## Claims

1. Hydraulic tensioning device (1) for a chain drive with
- a receptacle (10) extending along a longitudinal axis in the axial direction,
- a tensioning piston (9), which is guided in the receptable (10) and which has latching grooves (11) on its outer circumferential surface,
- a latching element (12) having two annular sections (13) and an open and a closed radial extension (14a, 14b), wherein the open radial extension (14a) includes an interruption of the latching element (12), so that at the open radial extension (14a) the latching element (12) can be pressed apart, and wherein the closed radial extension (14b) refers to a region of the latching element (12) without interruption,
- a clamping stop (15) and a sliding stop (16) axially spaced from each other, wherein the clamping stop (15) defines a clamping stop plane (32) and the sliding stop (16) defines a sliding stop plane (33), and the receptacle (10) has two axial extensions (17) extending in the axial direction between the clamping stop plane (32) and the sliding stop plane (33),
**characterized in that**
the sliding stop (16) has a sliding stop element (52), wherein the sliding stop element (52) has a transition section (53) and a functional section (54) extending in the radial direction, and wherein the sliding stop element (52) is supported on the axial extensions (17), and **in that** the functional section (54) fulfills a contacting function, such that the sliding stop element (52) is brought into contact with the latching element (12) when the tensioning piston (9) extends from the receptacle (10), so that the latching element (12) is caught by the sliding stop element (52) and pushed into a next latching groove (11) of the tensioning piston (9) .

2. Hydraulic tensioning device according to the preceding claim, **characterized in that** the sliding stop element (52) is limited in its axial mobility in the piston retraction direction and piston extension direction by a counter contour (55) on the axial extension (17) of the receptacle (10) interacting with the functional section (54).

3. Hydraulic tensioning device according to claim 2, **characterized in that** the counter contour (55) is formed by an axial extension (17) shaped as a T-piece and by a nose (56) formed on the axial extension (17).

4. Hydraulic tensioning device according to one of the preceding claims, **characterized in that** the sliding stop element (52) is fixed in the radial direction by an undercut (57) arranged on the functional section (54).

5. Hydraulic tensioning device according to one of the preceding claims, **characterized in that** the sliding stop element (52) can be pushed in the radial direction over the axial extension (17), wherein the sliding stop element (52) bears against the axial extension (17) in a radially inwardly preloaded manner.

6. Hydraulic tensioning device according to one of the preceding claims, **characterized in that** the two axial extensions (17) circumferentially include a latching section (42), wherein one of the two annular sections (13) is engageable with one of the latching grooves (11) in the region of the latching section (42).

7. Hydraulic tensioning device according to one of the preceding claims, **characterized in that** the latching element (12) can be brought into contact with the sliding stop (16) in the region of the constriction (45).

8. Hydraulic tensioning device according to one of the preceding claims, **characterized in that** the two axial extensions (17) are arranged separately from each another in the region of the sliding stop plane (33).

## Revendications

1. Dispositif de tension hydraulique (1) pour un entraînement par chaîne avec
- un logement (10), qui s'étend le long d'un axe longitudinal dans la direction axiale,
- un piston de serrage (9), qui est guidé dans le logement (10) et qui comprend des rainures d'encliquetage (11) sur sa surface périphérique extérieure,
- un élément d'encliquetage (12), qui comprend deux sections annulaires (13) ainsi qu'un extension radiale ouverte et un extension radiale fermé (14a, 14b), l'extension radiale ouverte (14a) comprenant une interruption de l'élément d'encliquetage (12), de sorte qu'au niveau de l'extension radiale ouverte (14a), l'élément d'encliquetage (12) peut être écarté par pression, et l'extension radiale fermé (14b) se référant à une région de l'élément d'encliquetage (12) sans interruption,
- une butée de serrage (15) et une butée coulissante (16), qui sont espacées axialement l'une de l'autre, la butée de serrage (15) définissant un plan de butée de serrage (32) et la butée coulissante (16) définissant un plan de butée coulissante (33), et le logement (10) comprenant deux extensions axiales (17), qui s'étendent dans la direction axiale entre le plan de butée de serrage (32) et le plan de butée coulissante (33), **caractérisé en ce que**
la butée coulissante (16) comprend un élément de butée coulissante (52), l'élément de butée coulissante (52) comprenant une section de transition (53) et une section fonctionnelle (54) s'étendant dans la direction radiale, et l'élément de butée coulissante (52) s'appuyant sur les extensions axiales (17), et **en ce que** la section fonctionnelle (54) remplit une fonction de contact, de telle sorte que l'élément de butée coulissant (52) est mise en contact avec l'élément d'encliquetage (12) lorsque le piston de serrage (9) sort du logement (10), de sorte que l'élément d'encliquetage (12) est capturé par l'élément de butée coulissant (52) et poussé dans une prochaine rainure d'encliquetage (11) du piston de serrage (9).

2. Dispositif de tension hydraulique selon la revendication précédente, **caractérisé en ce que** l'élément de butée coulissant (52) est limité dans sa mobilité axiale dans le sens d'entrée du piston et dans le sens de sortie du piston, par le fait qu'un contre-contour (55) sur l'extension axiale (17) du logement (10) interagisse avec la section fonctionnelle (54).

3. Dispositif de tension hydraulique selon la revendication 2, **caractérisé en ce que** le contre-contour (55) est formé par une extension axiale (17) en forme de pièce en T et par un nez (56) formé sur l'extension axiale (17).

4. Dispositif de tension hydraulique selon l'une des revendications précédentes, **caractérisé en ce que** l'élément de butée coulissant (52) est fixé dans la direction radiale par une contre-dépouille (57) disposée sur la section fonctionnelle (54).

5. Dispositif de tension hydraulique selon l'une des revendications précédentes, **caractérisé en ce que** l'élément de butée coulissant (52) peut être poussé dans la direction radiale sur l'extension axiale (17), l'élément de butée coulissant (52) s'appuyant contre l'extension axiale (17) en étant précontraint radialement vers l'intérieur.

6. Dispositif de tension hydraulique selon l'une des revendications précédentes, **caractérisé en ce que** les deux extensions axiales (17) comprennent circonférentiellement une portion d'encliquetage (42), l'une des deux portions annulaires (13) pouvant être mise en prise avec l'une des rainures d'encliquetage (11) dans la région de la portion d'encliquetage (42).

7. Dispositif de tension hydraulique selon l'une des revendications précédentes, **caractérisé en ce que** l'élément d'encliquetage (12) peut être mis en contact avec la butée coulissante (16) dans la région du rétrécissement (45).

8. Dispositif de tension hydraulique selon l'une des revendications précédentes, **caractérisé en ce que** les deux extensions axiales (17) sont disposées séparément l'une de l'autre dans la région du plan de la butée coulissante (33).
